# EUROPEAN PATENT SPECIFICATION

(11) **EP 2 978 891 B1**
(45) Date of publication and mention of the grant of the patent: **22.05.2019**
(21) Application number: 13716466.1
(22) Date of filing: 27.03.2013
(51) Int. Cl.: D06P 1/00, B82Y 30/00, C01B 33/18, C09B 67/02, C09C 1/30, C09B 67/46

(54) **REACTIVE SILICA NANOPARTICLES CONTAINING IMMOBILIZED DYE FOR PERMANENT COLOURATION OF FIBRES**
REAKTIVE SILICANANOPARTIKEL MIT IMMOBILISIERTEN FARBSTOFFEN ZUR PERMANENTEN FÄRBUNG VON FASERN
NANOPARTICULES DE SILICE RÉACTIVES CONTENANT UN COLORANT IMMOBILISÉ POUR LA COLORATION PERMANENTE DES FIBRES

(43) Date of publication of application: 03.02.2016
(73) Proprietor: Universidade do Minho, 4704-553 Braga (PT)
(72) Inventor: NAYLOR DA ROCHA GOMES, Jaime Isidoro, P-4710-187 Braga (PT); FERNANDES MONTEIRO SAMPAIO, Sandra Cristina, P-4700-103 Real Braga (PT); CALHEIROS MAIA, Frederico, P-3830-711 Gafanha da Nazaré (PT); DA SILVA DUARTE, Adriana Dinora, P-4585-900 Recarei (PT)
(74) Representative: do Nascimento Gomes, Rui
(86) International application number: PCT/PT2013/000019
(87) International publication number: WO 2014/158042

(56) References cited:
- US-A1- 2009 217 465
- M.S.Kim, S.I.Seok et al.: "Encapsulating of water-soluble dye in spherical sol-gel silica matetrices", Journal of Sol-Gel Science and Technology, 2003, pages 355-361, XP002717482, ISSN: 0928-0707, DOI: 10.1023/A:1024081322480 Retrieved from the Internet: URL:http://hnp.hanyang.ac.kr/file/paper/40 .pdf [retrieved on 2001-08-30]
- Schottner Gerhard: "Hybrid sol-gel-derived polymers: application of multifunctional materials", Chem. mater, vol. 13 15 October 2001 (2001-10-15), pages 3422-3435, XP002717483, Retrieved from the Internet: URL:http://nathan.instras.com/documentDB/p aper-192.pdf [retrieved on 2001-02-12]

## Description

### Field of invention

The present invention relates to reactive silica nanoparticles comprising an immobilized dye and process for producing them, to fibres and textiles comprising said nanoparticles and to textiles comprising said fibres, and to the process of application of the nanoparticles to the fibres. Therefore, the present invention is useful for dyeing purposes such as textiles.

### Background of the invention

The main groups of dyes used to dye cellulosic fibres are reactive dyes. Since reactive dyes were introduced for dyeing cellulosic fibres not many developments that solve completely the problems that these dyes pose on the environment have been observed. In particular, the large amount of water required for the removal of the dye that has not reacted with the fibres and has hydrolyzed in the process of dyeing is still an open situation. The hydrolyzed dye is difficult to remove from the fibres and if it remains in the textiles it will stain adjacent clothes or other clothes present in the washing machine during laundering.

On the other hand, soluble reactive dyes that are left in the effluent will be very difficult to remove causing aesthetical pollution and obstruction to light in the rivers and large quantities of products are needed for their precipitation for removal, increasing pollution. In the case of wool fibres, the most popular dyes used for wool fibres due to the strong colours and maximum wash fastness required, are metal-complex dyes and have heavy metals such as chrome in their formula, with no future due to the high toxicity of chromium. It has not been possible to replace them with reactive dyes because of the same problems encountered in the dyeing of cellulosic materials, i.e. loose and hydrolyzed dye, and need for its removal usually done with ammonia. They also pose problems in dyeing wool evenly.

WO2004060738 describes a delivery system comprising particles containing at least one part of alumina linked with dyes fixed to substrates negatively charged useful for delivering pharmaceuticals or for delivering in printing processes. Since the dyes are for delivering, they are not immobilized and would leach into the surrounding dye bath and would not have wet fastness. Moreover, the particles must be positively charged in order to bind to the negatively charged substrate.

In FR2831178 dyes are immobilized in silica particles with coupling agents including silanes in a way that they are not removed easily from the silica particles. The silane coupling agents mentioned in this document do not include silane having as functional group an epoxy group nor a glycidyl group. The object of this method is to improve dispersibility of dyes in polymer matrixes and not for application in textiles. Moreover, no mention is made on reactive groups of the coupling agent being left unreacted for further reaction with textile fibres.

US2009099282 describes functionalized silica nanoparticles with an anionic silane group, where a fluorescent cationic dye is linked via an ionic bond to the anionic silane or via a covalent bond. It is neither a bifunctional silane nor a bifunctional reactive dye and therefore these silane groups do not leave a free reactive group to link to the fibres. In result, the nanoparticles cannot be linked to fibres via a covalent bond.

All the above mentioned documents use a process known as "doping". Since the dye is immobilized on already formed silica particles, it produces hydrophobic particles due to the polymerization of the silane that forms a hydrophobic film around the particles.

The fixation of nanoparticles onto the fibres can be promoted firstly by diffusion as described in WO2004/060378 and US2003106160. However this will not be enough for the nanoparticles to withstand washing conditions of domestic laundering.

In previous works (J. Gomes et al. - Journal of Advanced Material Research, Vol. 332-334, 2011, pp 113-1139) disclose nanoparticles containing immobilized acid dye by a doping method with a silane coupling agent without the glycidyl group, leaving no free reactive group to react with fibres, applied to textiles by exhaustion also based only on diffusion of the coloured nanoparticles into the textile structures. However, it was observed that diffusion is not sufficient for fixation of coloured nanoparticles on fibres when dyeing medium-dark colours: the dye comes out when the already coloured nanoparticles are subjected to conditions usually applied on cotton in standard wash fastness tests and in domestic washing, such as temperatures of 60°C. In another previous work, J. Gomes et al, 22nd IFATCC International Congress, Stresa, Italy, 5-7 May 2010, it was observed that on wool and silk, the unreactive nanoparticles containing immobilized acid dye wool only withstand washing conditions at 40°C and for light colours, which would not compete with machine washable wool dyed with reactive dyes, that withstand temperatures of 60°C.

It was observed that only for light colours the wash fastness was equivalent to the standard equivalent of fabrics dyed with reactive dyes. Therefore, silica nanoparticles containing acid dyes, fixed on the silica with a silane without the glycidyl or other group capable of reacting with the fibres, are not suitable to obtain medium or dark colours, since the rinsing at the end of the dyeing removed most of the nanoparticles.

In US6607994 a coupling agent is used for linking nanoparticles to fibres by a padding process followed by thermal fixation. The nanoparticles may contain dyes but they are not chemically linked to the nanoparticles and can therefore separate and leach from them.

In US20030013369 nanoparticles containing payload entrapped in the particles are fixed onto fibres by coupling agents, but of the groups mentioned there are no glycidyl groups of the payloads mentioned and reactive dyes are expressly excluded from such functional compounds and other soluble dyes such as direct dyes are not mentioned, being specified only an indigo insoluble dye, and there is no mention of a chemical covalent bond between dye and the polymeric nanoparticle. The sol-gel process is not mentioned neither is silica or its precursors.

Fixing agents, such as cationic fixing agents (ex. Indosol E50 from Clariant or Matexil FXN from Dystar) are sometimes used to improve washfastness and shorten the wash-off sequence for reactive dyes needed after dyeing. However, these fixing agents lower the already low lightfastness of reactive dyes making it an inadequate alternative to washing-off.

Reactive dyes already have worse ligtfastness than other dyes, such as direct dyes, used for cellulosic fibres. This is a handicap for many applications, such as outdoor clothes and even common clothes that are exposed to light or UV lighting in shops and to drying in sunlight. In our patent, direct dyes can be immobilized in the silica nanoparticles so as to have the required lightfastness for those applications.

The objective of the present invention is to solve these problems by using coloured nanoparticles that bind to the fibres by covalent bonds, just like reactive dyes.

### Summary of the invention

The present invention relates to reactive silica nanoparticles containing an immobilized dye which are useful for colouration of fibres with improved discolouration resistance and ecological properties.

The dye is firstly immobilized on the silica, by first reacting the NH2 or the OR group of the dye with the silane group, forming a compound that then reacts with the silicon atoms through its silane groups still free to react, during the process of formation of the nanoparticles, by a sol-gel process, in which a simultaneous reaction of the dye takes place with the silicon at the same time as the polymerization and precipitation of the silica. Accordingly, the present invention provides silica nanoparticles with immobilized dyes, as described in claim 1.

Another object of this invention is the process of fixation of the coloured nanoparticles to the fibres. The different silica particles comprise reactive groups with pH and temperature sensitivity, suitable for various types of fibres, thus allowing the use of a conventional dyeing process, such as the process by exhaustion or padding followed by fixation. Accordingly, the present invention provides fibres comprising said nanoparticles, as defined in claim 11.

The present invention allows a great improvement in the fixation of coloured nanoparticles to fibres, through the formation a covalent bond between the fibres and the coloured nanoparticles, thus avoiding losing the nanoparticles fixed on the surface of the fibres during the process of washing-off excess colour after colouration of the fibres with the coloured nanoparticles. However the washing-off of excess loose unfixed colour is easy, needing only one rinsing with cold water. Accordingly, the present invention also provides textiles comprising said fibres, as defined in claim 12.

Accordingly, the present invention also provides a process of dyeing fibres, by fixing the silica nanoparticles of the present invention to a fibre, as defined in claim 17.

Therefore, the present invention is useful for dyeing fibres, such as textiles.

The textiles made up of the fibres, such as yarn, knitwear, and woven fabrics, show a high wash fastness such as when they are washed in washing machine with domestic detergents.

The washfastness of the textile materials with the fixed coloured nanoparticles of the present invention is improved, and the washing-off of excess colour is easy, needing only one rinsing with cold water, saving a lot of water and energy in the process when compared with the washing-off of reactive dyes applied to the same fibres. The cationic fixing agent can be applied at the end of dyeing, before the cold rinse.

In these cases, direct dyes are preferably used to incorporate the nanoparticles so as maintain a higher lightfastness than reactive dyes. The colour of the effluent is also easier to remove than when dyeing with reactive dyes.

Another advantage of the present invention is the possibility of the re-use of the water and even of the coloured nanoparticles in a new dyeing process, since they are applied at acid pH for wool and can when applied by exhaustion above 60°C can be applied at neutral pH for cellulosic fibres, which avoids the hydrolysis of the reactive group of the nanoparticles and safeguarding the reactivity of these groups in the nanoparticles for further reactions. It is also observed a good wash fastness of the textiles materials dyed with the used dye bath.

### General Description of the invention

The present invention relates to reactive silica nanoparticles containing an immobilized dye, to fibres comprising said nanoparticles and to textiles comprising said fibres, to a process to produce the nanoparticles and to the process of application of the nanoparticles to the fibres.

### 1. Characterization of the silica nanoparticles

The nanoparticles of the present invention are silica nanoparticles that comprise an immobilized dye, the silica nanoparticles having with at least one reactive group for reacting with specific fibres. The reactive dye can be immobilized onto the silica nanoparticles by a coupling agent that links the dye to the particle, leaving one reactive group free to react with the fibres. The reaction of the dye with the silane can occur via a nucleophilic substitution reaction between nucleoplilic groups present in the dyes, such as amino, NH2, or hydroxyl, OH, and a reactive silane group such as a trimetoxysilane for example. Said silica nanoparticles present hydrophilic behaviour that confers them affinity to cellulosic fibres.

It was also found that by incorporating dyes that have great affinity for cellulosic fibres, such as direct dyes and bifunctional or trifunctional reactive dyes, that the affinity of the coloured nanoparticles is also greatly enhanced In consequence, they do not need electrolyte (salt) in the dyeing process to overcome the repulsion from the cellulosic fibres when dyeing light to medium colours. This is another great advantage both in ecological and in economical terms over the standard process with dyes, where anionic dyes are repulsed by cellulosic anionic charges and need an electrolyte such as sodium chloride to overcome such repulsion.

It was also observed that when incorporating acid dyes in the nanoparticles even nanoparticles that have a glycidyl or another reactive group, it was not possible to dye in medium to dark colours due to the low affinity of the acid dyes for cellulosic fibres and consequently to the low affinity of the coloured nanoparticles.

Reactive groups or functional groups in the scope of the present invention are the ones capable of binding to specific fibres. The reactive groups react with the fibres by a nucleophilic substitution reaction (ex. triazine or glycidyl/epoxy) or by a nucleophilic addition mechanism (vinylsulphone or acrylamide).

For applications onto cellulosic fibres suitable reactive groups are the ones which comprise, monochlorotriazine, dichlorotriazine, trichlorotriazine monofluorotriazine, difluorochloropyrimidine or vinylsulphone and glycidyl (in the epoxy form).

For applications onto keratin fibres, such as wool, silk, reactive groups comprising pyrimidine, dichlorotriazine, vinylsulphone or bromoacrylamide and glycidyl (in the epoxy form) can be used.

The nanoparticles of the present invention are rendered reactive by immobilizing a reactive group through a silane coupling agent such as(RO)3Si-RCH2CH2OH, that contains a glycidyl/epoxy group, or any other reactive group capable of reacting with hydroxyl (OH) group of cellulosic fibres, such as cotton or viscose, or with amino (NH2) and thiol (SH) groups of protein fibres such as wool and silk.

The nanoparticles of the present invention may also comprise bifunctional reactive dyes containing couples of groups such as monochlorotriazine-vinylsulphone, monochlorotriazine-monochlorotriazine, fluorotriazine-vinylsulphone, fluorochloropyrimidine-vinylsulphone with extra affinity and capable of reaction with cellulosic fibres.

The nanoparticles of the present invention may also comprise trifunctional reactive dyes containing a combination of any of the above mentioned reactive groups.

Therefore, in the scope of the present invention epoxysilanes are used to link the dye to the fibre. The dyes via a nucleophilic group, such as amino, NH2, or OH, hydroxyl, or OR, where R is an alkyl radical, can react with a functional silane such as trimetoxy silane and thus be linked to the silica nanoparticles in this way. The other reactive group of the silane (RO)3Si-RCH2CH2OH, the glycidyl group in its epoxy form reacts with the fibres such as the hydroxyl, OH, groups present in cellulosic fibres or the amino, NH2, or thiol, SH, groups of the wool and silk. In this way dyes that have affinity for cellulosic fibres such as direct dyes that have no reactive groups can be linked to cellulosic fibres via the glycidyl group (in its epoxy form). There are therefore several possibilities of linking the nanoparticles to the fibres depending on the dyeing conditions. The glycidyl groups present in the
nanoparticles are very sensitive to hydrolysis at acid pH but will react even at room temperature in neutral and alkaline conditions with cellulosic fibres whereas reactive groups such as monochlorotriazine need alkaline pH and/or temperatures above 80°C for reaction with cellulosic fibres. Preferably the dyes that do not have a reactive group and will rely on the epoxy reactive group of the silane compound for its reaction with the fibre, should be a water soluble dye with high affinity for cellulosic fibres, such as those designated by direct dyes in the specialized literature and those for wool and silk fibres should have sulphonic groups for ionic attraction by these fibres, such as acid and direct dyes. Examples of such dyes can be found in the Colour Index where they are represented. They are preferably chosen from those dyes with two azo groups or diphenyl groups so as to have higher affinity due the Van der Waals forces that they generate with the fibres. Examples of three "primary" colours of such dyes that can react with the metoxysilane group of (RO)3Si-RCH2CH2OH, via their hydroxyl, OH, or amino, NH2, groups are dyes such as Sirius Blue FKN (formula i), Sirius Rose BB (formula ii) or C.I. Direct red 80 (formula iii) .

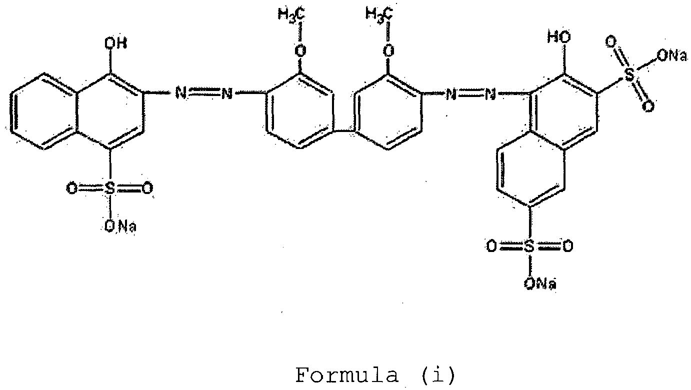

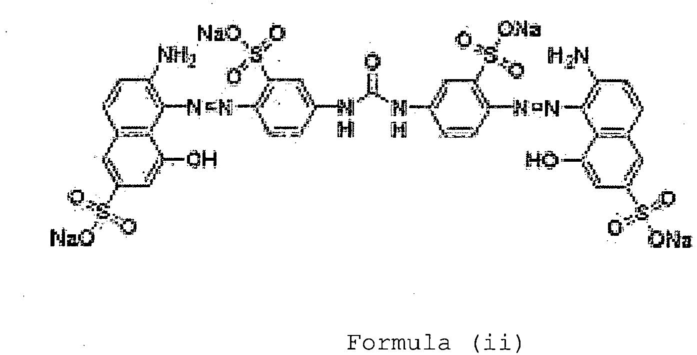

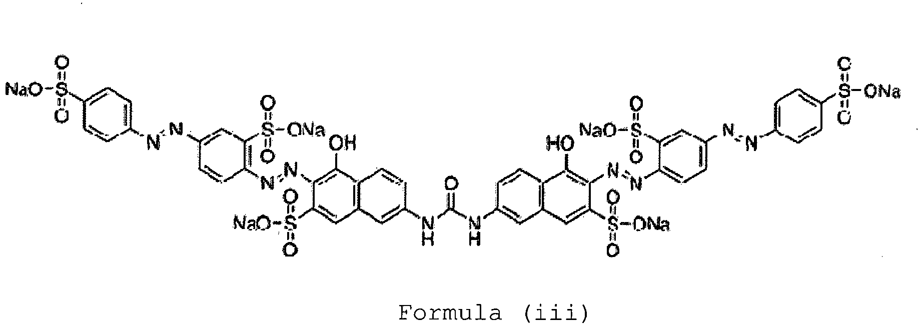

As an alternative to the silane having a reactive group such as glycidyl/epoxy, the dye itself can have the reactive group that will be part of the silica nanoparticle after fixing the dye on the silica nanoparticle with the silane. The reactive groups of dyes of the present invention are of dyes that have the general formula (I), (II), (III), (IV), (V), 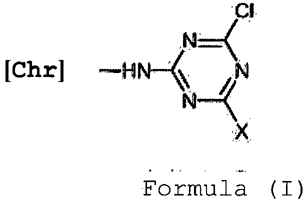 wherein,
[Chr] represents a chromophore;
X represents NH-R₁, Cl or an aromatic group R₂;
R₁ represents CₙH₂ₙ₊₁; and
R₂ represents an aromatic group of the Formula (Ia)

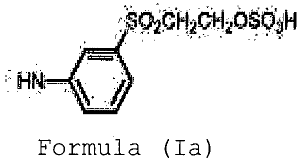

The term "chromophore" in the scope of the present invention means any chemical group that produces colour in a compound and unites with certain other groups to form dyes. 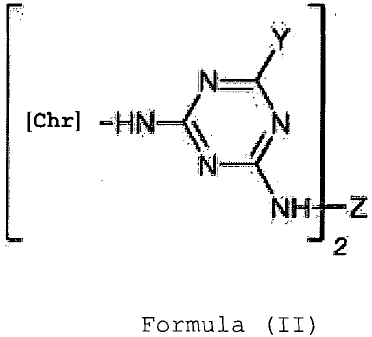 wherein,
[Chr] represents a chromophore;
Y represents fluorine, and
Z represents an alkene linking group 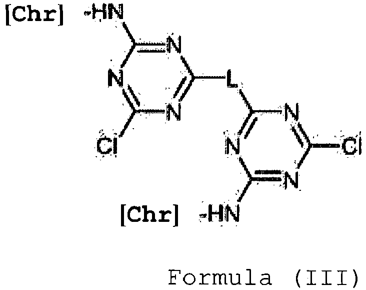
wherein,
[Chr] represents a chromophore; and
L represents a linking amino group 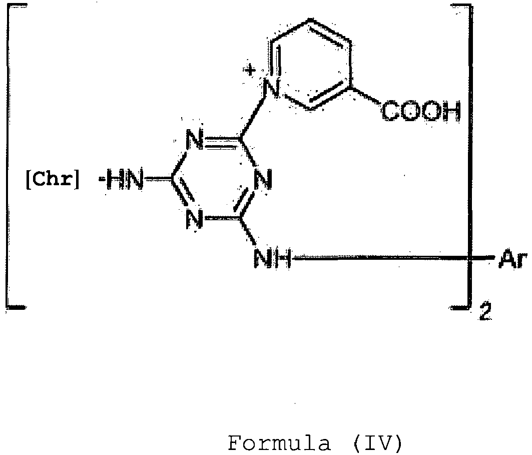
wherein,
[Chr] represents a chromophore; and
Ar represents an aromatic chromophore 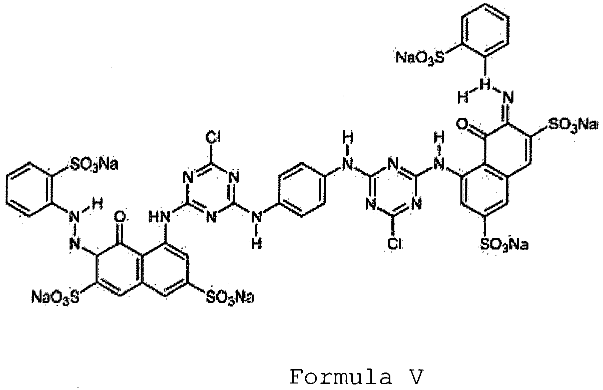 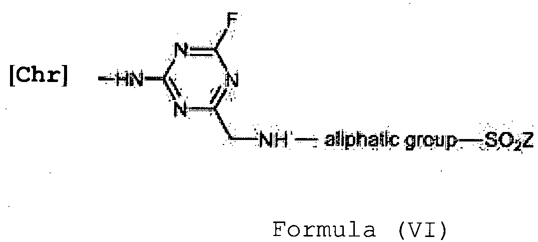
wherein,
Z represents CH=CH₂ or CH₂CH₂OSO₃Na

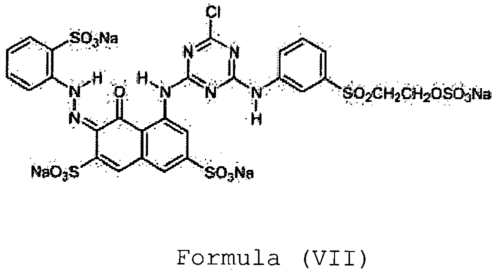

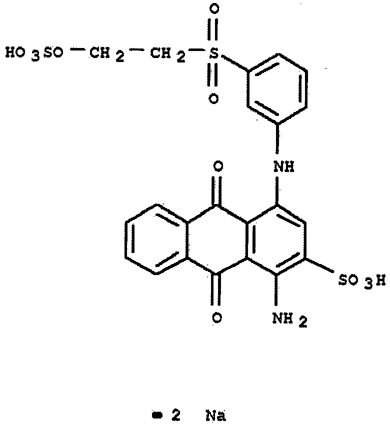

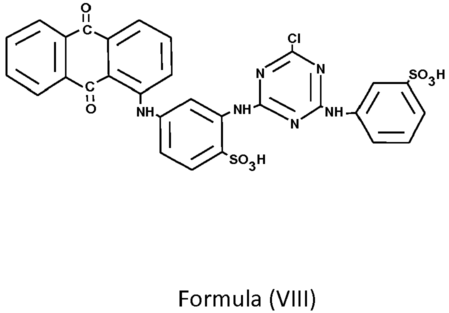

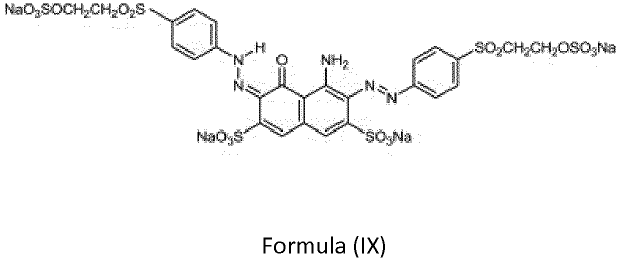

The dyes of the present invention may also comprise bifunctional reactive groups such as monochlorotriazine-vinylsulphone, monochlorotriazine-monochlorotriazine, fluorotriazine-vinylsulphone, fluorochloropyrimidine-vinylsulphone.

Therefore, in the scope of the present invention dyes that can be linked to the silica nanoparticles via one of the nucleophilic groups in their structure, such as amino, NH2, or hydroxyl, OH or OR, where R is an alkyl radical, and a coupling agent that contains as one of the two reactive groups, a group such as the glycidyl group of epoxysilanes that is capable of reacting with cellulosic fibres or keratin fibres, through the reaction with the hydroxyl, OH, group of cellulosic fibres or the amino, NH2, or thiol, SH, group of the keratin fibres. The other reactive group of epoxysilane (ex. GLYMO), the silane group reacts with the silica. In the case of incorporating reactive dyes, the reactive group of the dye is left intact for subsequent reaction with the fibre, linking through the nanoparticles to the fibre.

### 2. Process for making the nanoparticles with an immobilized dye

The present invention provides a process for immobilization of a dye comprising at least one nucleophilic group such as NH2 or OH, or OR, where R is an alkyl group, onto silica nanoparticles so that the nanoparticles are hydrophilic and present affinity towards the fibres. For this purpose, two alternative processes are provided: the first is based on a sol-gel process and the second uses a water-in-oil emulsion.

### 2.1 w/o Sol-gel based process

The process of the present invention is based on a sol-gel process comprising the following steps:
a) Forming a dye-silane compound;
b) Adding the compound of a) to silica precursor;
c) Polymerization of the silica nanoparticles of b) and their precipitation

The dye-silane compound is a dye which comprises the silane (RO)3Si-RCH2CH2OH in which R is a radical of general formula CnH2n+1 such as 3-glycidoxypropyltrimethoxysilane (GLYMO) is obtained by reaction of a dye with the (RO)3Si-group of the silane under near neutral pH conditions (pH = 6-8).

A dye according to the present invention is dissolved in water to provide a water solution having a dye concentration of 0.1-10.0%, preferably between 0.1-5%. Then, a solution containing GLYMO is added at room temperature. The mixture is stirred for approximately 1 hour.

After the formation of the dye-silane compound a silica precursor is added. For this purpose, a water soluble precursor is preferred. Silica precursors suitable for the present invention are sodium meta-silicate and tetra ethyl orthosilicate (TEOS) .

An aqueous solution of 0.5-5 Kg of sodium metasilicate and 0.2-0.5 L of Triton in 10 L of water is prepared at room temperature during 5 minutes with stirring. To this solution is then added 20-30 L of hexane. A w/o emulsion is formed by stirring for ∼10 minutes and then the dye-GLYMO compound is added to this emulsion.

Finally, the silica nanoparticles comprising the immobilized dye of b) are subject to a polymerization process followed by precipitation.

Ammonium chloride in an amount between 1-3 kg is added with stirring, and the silica particles are formed during a period of 30 approximately minutes. They are then left to precipitate, filtered and dried.

In the process it is necessary that the nanoparticles are hydrophilic and the dye not to be enveloped by a silane polymer but be accessible to the fibre and therefore the process of preparation is a simultaneous reaction of the dye takes with the silicon oxide at the same time as the polymerization and precipitation of the silica.

In this way we avoid the polymerization of the silane that would cause the nanoparticle to be hydrophobic and would reduce the affinity of the dye towards the fibres.

The process for making silica nanoparticles comprising an immobilized dye is based on sol-gel process but optimized for the purpose of the particles of this invention.

The process is developed in a water in oil emulsion (w/o) so as to provide mini-reactors in the water droplets, where the nanoparticles will be formed.

In this way dye-silane compound prepared previously reacts with the silica nanoparticles as they are formed inside the reactors (water droplets).

For the preparation of the emulsion oil phase (w/o) an organic solvent is used. Suitable organic solvents are hexane or petroleum ether.

In this way and the sol-gel matrix is formed inside these water droplets dispersed in an organic solvent, and the dye remains inside the nanoparticle formed in the water droplet. Otherwise, without solvent, it would be dispersed all over the sol-gel.

The use of an organic solvent in such large quantities (3:1 solvent:water) is a limiting factor for the process since it requires special non-flammable conditions for production but also makes more difficult to remove it completely during the production, without destabilizing the sol-gel dispersion. Furthermore, organic solvents that may be used for dyeing and finishing of textiles are very restricted due to their environmental toxicity.

Therefore, in another embodiment of the present invention it is provided an alternative process for producing the nanoparticles of the invention by using an oil-in-water emulsion.

### 2.2 o/w sol-gel Emulsion process

The process for producing silica nanoparticles of the present invention based on an o/w emulsion comprises the following steps:
a) Adding a silicate alkaline aqueous solution to the lipophilic water insoluble dye-silane prepared previously;

An aqueous solution of 2 Kg of sodium metasilicate and 0,5L of Triton in 10 L of water is prepared at room temperature during 5 minutes with stirring. This solution is then added to 2L of the dye-silane compound prepared as described in the previous section. Since the dye-silane compound is in a different phase, oil phase, to the alkaline silicate, it prevents the dye and the silane (GLYMO) to hydrolyze prematurely.

Finally, the silica nanoparticles comprising the immobilized dye are subject to a polymerization process by the addition of an acid such as hydrochloric acid, followed by precipitation. Ammonium chloride in an amount between 1-3 kg is added with stirring, and the silica particles are formed during a period of approximately 30 minutes. They are then left to precipitate, filtered and dried.

### 3. Characterization of the fibres

The present invention provides a fibre comprising a silica nanoparticle with an immobilized dye fixed to it.

Suitable fibres for the purpose of the present invention are fibres that contain functional groups that are capable to react with commercial reactive dyes and therefore fix the nanoparticles containing such dyes.

Natural fibres in the sense of the present invention are for example cotton, hemp, wool, silk, fibres from regenerated celluloses, such as viscose and lyocel.

### 4. Process for obtaining a fibre containing permanently fixed silica nanoparticles

The present invention provides a process for fixing the silica nanoparticles to a fibre comprising the following steps:
a) Providing a silica nanoparticle comprising an immobilized dye as described in section 1;
b) Reacting the nanoparticle of a) with an appropriate reactive group for a specific fibre, applied in specific conditions for that reactive dye and for the fibre, so that the reaction with the fibre is successful.

The way to measure accurately the intensity of a colour is by using the values K/S from the Kubelka-Munk equation and that can be read in a reflectance spectrophotometer with appropriate software. When dyeing with nanoparticles containing dyes that have no affinity for cellulosic fibres, such as acid dyes, and no reactive group, such as the case when fixing the dye to the fibre with an aminosilane with no glycidyl group, the values obtained for K/S were low and the wash fastness only was not lower because the colour was not a strong colour since a lot of nanoparticles were removed when rinsing after dyeing (Table 1) due to the low or absence of reaction of these nanoparticles with the fibre.

However, it was found that by using dyes immobilized in the nanoparticles containing reactive groups and said dyes being of high affinity for cellulosic fibres, such as direct and bi- and tri-functional reactive dyes, the K/S values even at concentrations of 30% wt. of the nanoparticles relative to the weight of fibre , were high and approached those obtained when applying 3% dye directly on the fibre for obtaining a medium/dark colour, meaning that the coloured nanoparticles with reactive groups remained in the fibre during the rinsing process (done after the dyeing).

Another effect was that even at these higher concentrations the staining wash fastness improved to the value of 4/5 or even 5 in the grey scale (1-5), meaning there was no visible staining in the adjacent white fabric used in the test together with the dyed fabric. With acid dyes the staining was visible lowering the values in the grey scale to 3 and 4 in the blue and yellow dye respectively.

So it is possible to obtain intense colours by using dyes immobilized in the nanoparticles with reactive groups, being said dye reactive or by the epoxysilane when said dye is not reactive, colours that were not possible to obtain when using acid dyes inside nanoparticles with no reactive group, whilst maintaining good wash fastness at these higher concentration of nanoparticles on the fibres.

A possible reason for this is when an unreactive dye, such as an acid dye, was immobilized in the nanoparticles with an organosilane, such as an aminosilane that did not contain a glycidyl/epoxy group, those coloured nanoparticles could not diffused into the fibres, once the fibre reached saturation and would be removed with one rinsing with water after dyeing, whereas with reactive dyes immobilized in the nanoparticles or with unreactive dyes immobilized with an epoxysilane the coloured nanoparticles would not be removed even those existing on the surface of the material. This may be due to the covalent bonds formed between the nanoparticles and the fibres, formed via the reactive dye or via the epoxy group of the epoxysilane if incorporating unreactive dyes in the silica. For example, in tables 2 and 4 it can be seen that the K/S values for nanoparticles containing reactive dye are much higher than those obtained previously with acid dyes in the nanoparticles.

Lightfastness of the coloured nanoparticles was found to be similar to reactive dyes they were made from but higher than for reactive dyes when incorporating direct dyes. The ISO standard test for measuring lightfastness of textiles is the ISO105BO2, where of the dyed samples are exposed to a xenon light and the fading of the samples is compared with standard blue samples numbered 1-8, with increasing lightfastness, 8 being the best, with no alteration in colour. Results are shown in Table 7.

### 5. Processes for applying coloured nanoparticles on textile materials

The coloured nanoparticles are applied as an aqueous dispersion, by an exhaustion process, a process for applying the coloured nanoparticles in which the fabric is immersed in at least 5 times its weight and the water is heated to promote diffusion into the fibres and subsequent reaction, and there is movement of the material or/and of the dye bath.

Temperature is raised to at least 60°C to increase diffusion of the nanoparticles into the material and promote levelness of colour. It is the same exhaustion process used for reactive dyes and in the same machines.

The formulation containing the nanoparticles can contain dispersing agents so as to keep the nanoparticles apart and ensure an even distribution in the textile material. The nanoparticles were applied in the same machines as soluble dyes, such as jets, jiggers when we dealt with fabrics and with drum machines for piece dyeing. For wool other types of machines that are used for dyes can also be used for nanoparticles.

It can also be applied by padding (impregnation) where the material is immersed in the dispersion of nanoparticles and is squeezed between rollers to remove the excess liquor and then fixed by reacting in the cold. The process is known as pad-batch, a process in which the material is left for hours for the reaction with the fibre to occur at room temperature. In this process the pH should be alkaline for the reaction with the fibres to occur, since the temperature is not as high as in exhaustion processes where neutral pH can be applied. They can also be fixed or by heating the material in a stenter (known as Pad-fix or Pad-steam). It is the same padding processes used for applying reactive dyes and in the same machines.

In another embodiment of this invention the coloured nanoparticles were applied by printing just like pigments. The process was a conventional screen printing process, flat screen. In the processes the coloured nanoparticles behave just like reactive pigments, reacting with the fibres provided they are fibres with functional groups such as natural fibres, under alkaline, neutral or even slightly acid conditions, depending on the reactive group that is present in the coloured nanoparticles. In the printing processes thickening agents are used and the colour is applied so as to form a pattern. It is important that it does not "run" or "bleed" so that the motifs have clear borderlines and the colour does not stain bordering motifs. For fixation it is necessary to heat after applying the coloured nanoparticles, and this stage is done just as for reactive dyes in an oven or a stenter. For reactive dyes it is necessary just as in dyeing to remove the hydrolyzed dye, the dye that hasn't reacted with the fibre, and this is usually a laborious process involving dipping in several washing baths, some at high temperatures, until the loose colour is all removed. Just as with dyeing, this is a stage that is a lot easier to achieve with coloured nanoparticles, since only one cold rinse is necessary to remove the coloured nanoparticles that are not linked covalently to the fibres.

### Description of the tables and figures

Table 1 shows K/S values and the washfastness values for coloured nanoparticles with immobilized acid dye, for a concentration of 15% o.w.f. of nanoparticles. The washfastness values were taken according ICO105C06C2, by treating the dyed samples to a washing procedure at 60°C for 30 minutes in a detergent solution containing 4 g/l of ECE detergent and sodium carbonate so as to adjust the pH to 10.5.
Table 2 shows K/S values and washfastness (ICO105C06C2ICO105C06C2) values for coloured nanoparticles with immobilized reactive dye for a concentration of 15% o.w.f. of nanoparticles, where it is possible to observe that for the same concentration of these nanoparticles as that applied for unreactive nanoparticles containing acid dye, we obtain higher intensity of colour reflected in higher values of K/S.
Table 3 shows the results for the washfastness test for unreactive nanoparticles containing acid dye wherein it is possible to observe that even when a maximum amount of coloured nanoparticles is applied the colour does not go beyond a low intensity, indicated by low K/S values and washfastness (ICO105C06C2ICO105C06C2) values for coloured nanoparticles with immobilized acid dye for a concentration of 30% o.w.f. of nanoparticles.
Table 4 shows the results for K/S values and washfastness (ICO105C06C2) values for coloured nanoparticles with immobilized reactive dye for a concentration of 30% o.w.f. of nanoparticles where it is possible to verify that when compared with table 3, the K/S values increase as expected with the increase of the concentration from 15% o.w.f. to 30% o.w.f. of the applied coloured nanoparticles without compromising the washfastness, that remains high.
Table 5 shows the results for fastness to wet friction values for coloured unreactive nanoparticles with immobilized acid dye for a concentration of 30% o.w.f. of nanoparticles, showing low fastness due to the lack of binding forces between nanoparticles and fibre.
Table 6 shows the results for fastness to wet friction values for concentrations for coloured nanoparticles with immobilized reactive dye for a concentration of 30% o.w.f. of nanoparticles, showing high fastness due to the strong covalent bonds between nanoparticles and fibre.
Table 7 shows the results lightfastness values for concentrations of equivalent colour strength for coloured nanoparticles and for reactive dye. It can be observed that the coloured nanoparticles containing immobilized direct dye have higher lightfastness than the reactive dye.

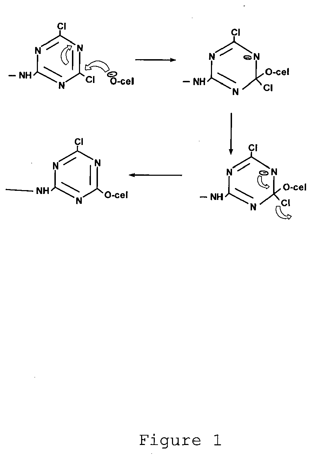

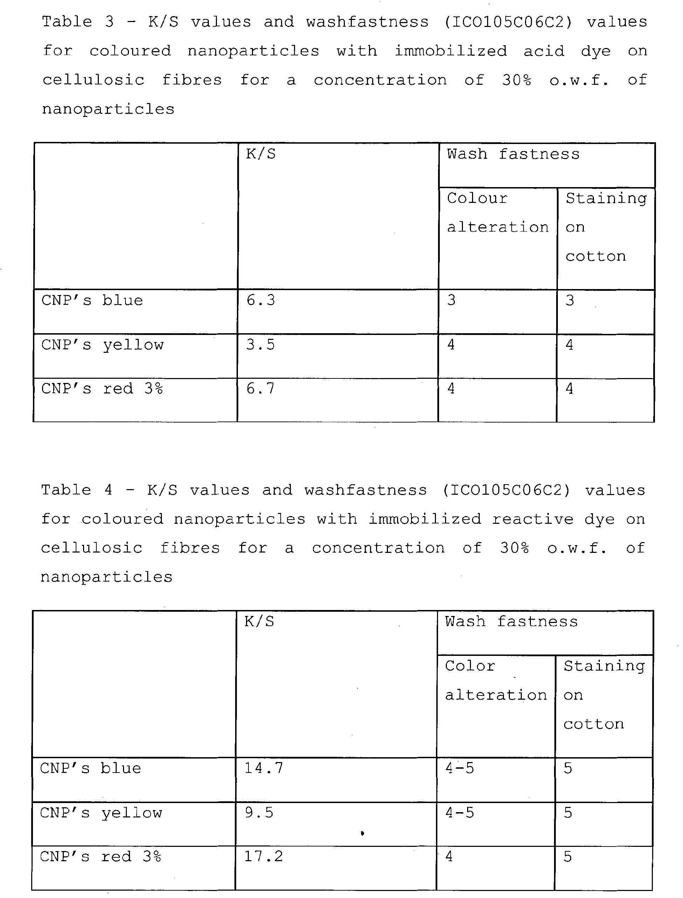

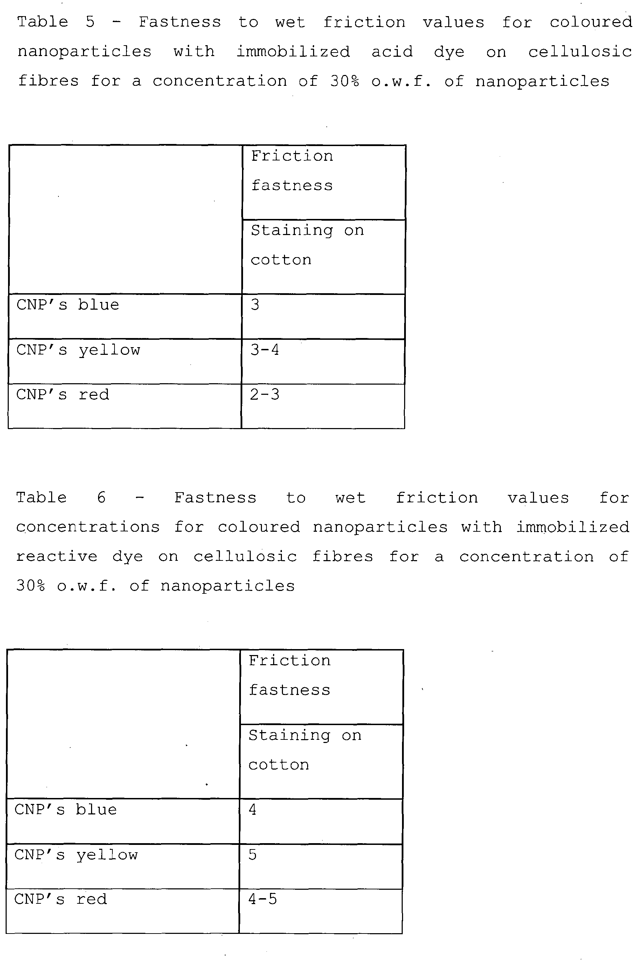

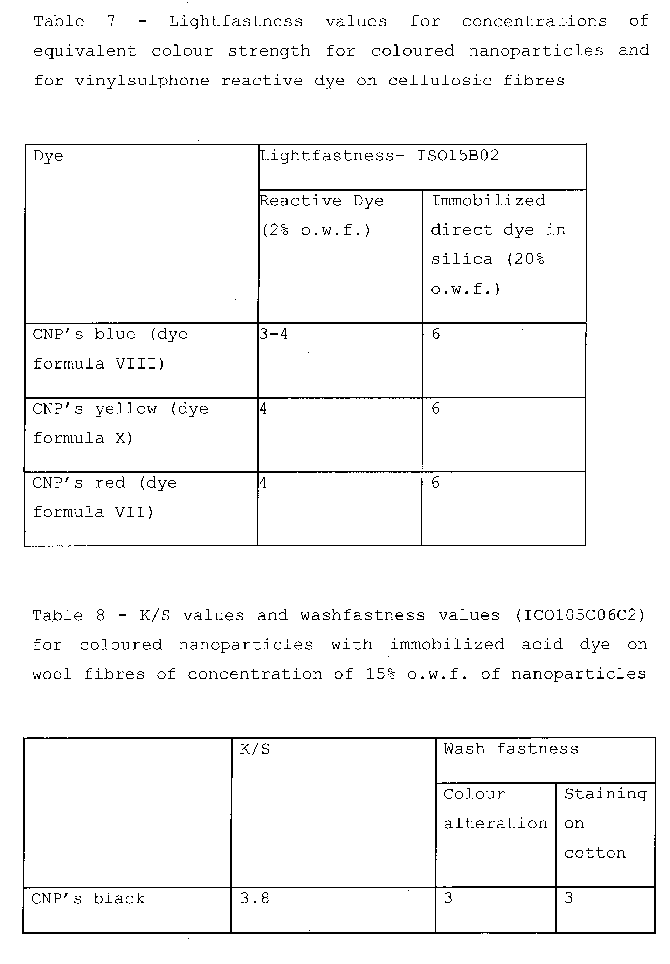

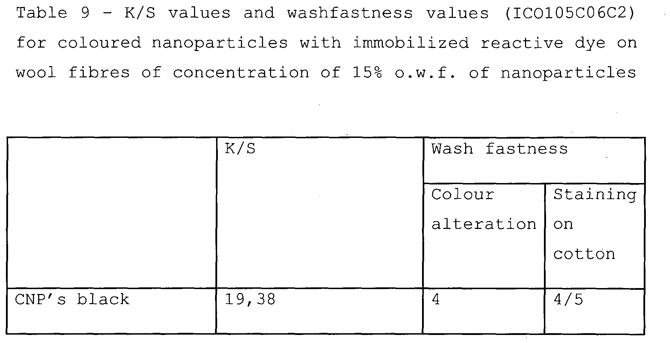

   Fig.1 - represents the reaction of a triazine group with cellulose, wherein the chromophore is represented by ©. In this scheme it is possible to observe that a covalent bond is formed between dye and the cellulosic fibre.

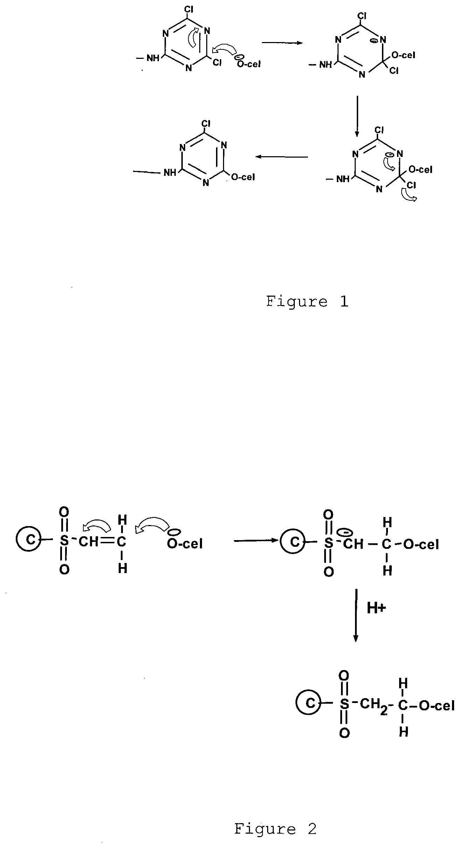

   Fig.2 - represents the reaction of vinylsulphone dyes with cellulose wherein the symbol © represents the chromophore. In this scheme it is possible to observe that a covalent bond is formed between the dye and the cellulosic fibre.

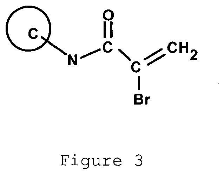

   Fig. 3 - represents the Bromoacrylamide reactive group wherein the symbol © represents the chromophore. In this scheme it is possible to observe that the dye has also a vinyl group ready to react with nucleophilic groups of wool or silk fibres by addition reaction and a Br substituent also ready to react with the nucleophiles via a substitution reaction.

### EXAMPLES

**Materials:** All reagents were used in analytical grade and dyes were commercial grade.
- C.I. Reactive Red 120 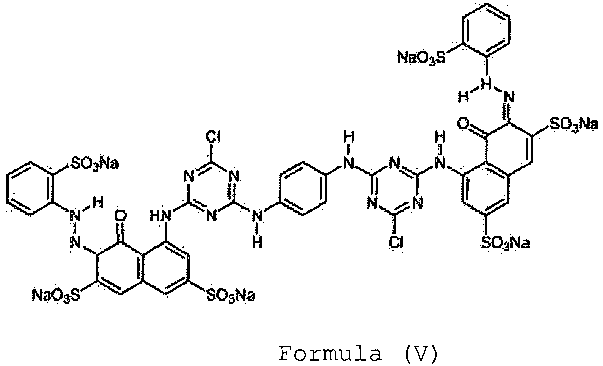
- Dye C.I. Reactive Red 194 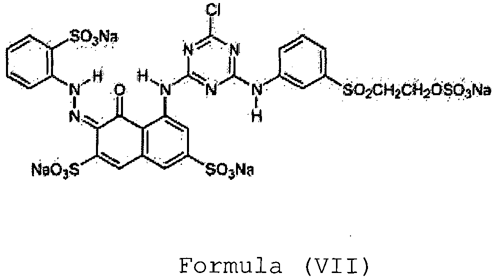
- Dye C.I. Reactive Blue 5 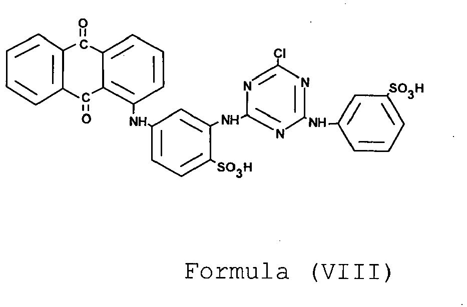
- Dye C.I. Reactive Black 5

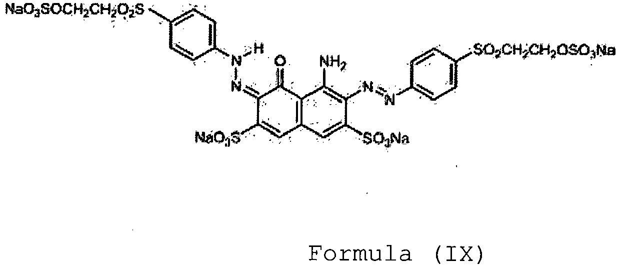

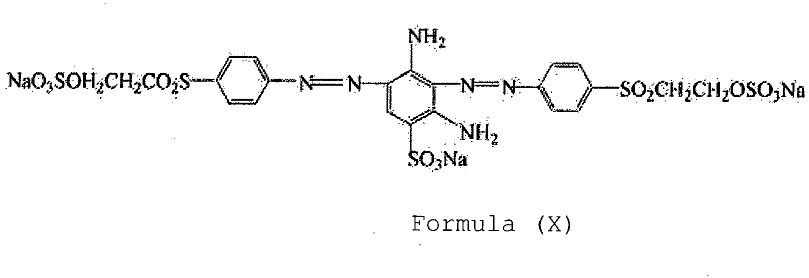

### Example 1- Preparation of blue coloured nanoparticles with direct dye and epoxy reactive group by method 2-without solvent

0.03 Kg of dye Sirius Blue FKN are added to 10 L of water and 5L of 3-Glycidyloxypropyltrimethoxysilane compound (GLYMO) are added to the dye solution and stirred for 30 min. 8 Kg of sodium meta-silicate are dissolved in 40 L of water, 5 G Triton are added and stirred for 60 minutes at room temperature. The dye-GLYMO compound formed previously is then added to the silicate solution and stirred for 1 hour at room temperature (20ºC). 1Kg of ammonium chloride are dissolved in 20 L of water are then added and stirred for 30 minutes. The dispersion is stirred for 2 hours. The nanoparticles are then filtered and dried in an oven at 70ºC.

### Example 2 - Preparation of red coloured nanoparticles with reactive dye with bifunctional dichlorotriazine reactive groups by method 2-without solvent

0.3 Kg of a dye C.I. Reactive Red 120 are added to 10 L of water and 5L of aminopropyltriethoxysilane are added to the dye solution and stirred for 30 min. 8 Kg of sodium meta-silicate are dissolved in 40 L of water, 5 G Triton are added and stirred for 60 minutes at room temperature. The dye-silane compound formed previously is then added to the silicate solution and stirred for 1 hour at room temperature (20ºC). 1Kg of ammonium chloride are dissolved in 20 L of water are then added and stirred for 30 minutes. The dispersion is stirred for 2 hours. The nanoparticles are then filtered and dried in an oven at 70ºC.

### Example 3 - Preparation of nanoparticles by method 1 with bifunctional reactive dye with diclorotriazine groups

0.3 Kg of a dye C.I. Reactive Red 120 comprising a compound of formula (V) is dissolved in 1 L of water added to 2 L of GLYMO at room temperature. The mixture is stirred for 1 hour. An aqueous solution of 2 Kg of sodium metasilicate and 0,5L of Triton in 10 L of water is prepared at room temperature during 5 minutes with stirring. To this solution is then added 30 L of hexane. A w/o emulsion is formed by stirring for 10 minutes and then the dye-GLYMO compound is added to this emulsion. 3 Kg of ammonium chloride are added with stirring, and the silica particles are formed during a period of 30 minutes. They are then left to precipitate, filtered and dried.

### Example 4 - Preparation of nanoparticles by method 1 with bifunctional reactive dye with one diclorotriazine group and one vinylsulphone group

An aqueous solution of 2 Kg of sodium metasilicate and 0.5L of Triton in 10 L of water is prepared at room temperature during 5 minutes with stirring. 0.03Kg of the dye C.I. Reactive Red 194 comprising the compound of Formula (VII) is dissolved in 1 L of water added to GLYMO and stirred for 10 minutes at room temperature. The silicate solution is then added to 2 L of dye-GLYMO at room temperature. The mixture is stirred for 1 hour. An aqueous solution 2 Kg of sodium metasilicate in 10 L of water is prepared and it is then added to the dye-GLYMO compound. This solution is then added to 30 L of hexane.0.5 L of Triton is added and then is stirred for 30 minutes. 3 Kg of ammonium chloride are added and the silica particles are formed during a period of 30 minutes. They are then left to precipitate, filtered and dried.

### Example 5 - Preparation of blue nanoparticles by method 1-with monofunctional vinylslphone reactive dye

0.03 Kg of the dye C.I. Reactive Blue 19 comprising the compound of formula (VIII) is dissolved in 1 L of water added to 0.2 L of GLYMO at room temperature. The mixture is stirred for 1 hour. An aqueous solution 5 Kg of sodium metasilicate in 10 L of water is prepared and it is then added to the dye-GLYMO compound. This solution is then added to 30 L of hexane, 0.5 L of Triton is added and then is stirred for 30 minutes. 10 Kg of ammonium chloride are added and the silica particles are formed during a period of 60 minutes. They are then left to precipitate, filtered and dried.

### Example 6- Exhaust dyeing with three primary colours

3 g of coloured silica nanoparticles of the three primary colours, red, blue and yellow, prepared by process as defined in example 1, are added to three separate containers with 100 ml of water in a container in a laboratory dyeing machine.

A piece of knitted bleached cotton, fabric weighing 10 g is added. The pH is adjusted to 7 with acetic acid, 2 g of common salt (sodium chloride) are added and the liquor containing the nanoparticles is heated up to 60°C, and simultaneously the machine is put into rotary motion. At the end of one hour, the fabrics are treated with 0,4 g of Indosol E50s for 10 minutes and then are taken out, rinsed under the tap with cold water, and dried in a stenter at 100°C for 5 minutes. The colour is measured in a spectrophotometer and the wet fastness is evaluated according to the standard ISO 105C05C6-C1 and the results are compared to the same fabric dyed with nanoparticles containing acid dye of the same colour. The results for washdastness of the fibres dyed with nanoparticles containing reactive dyes are superior as can be seen when comparing the results of table 1 and table 2. The results for lightfastness of the fabrics dyed with the nanoparticle containing the direct dyes are superior to those of the reactive dyes applied alone under the same condition, as can be seen in table 7.

### Example 7 - Preparation of nanoparticles for dyeing keratin fibres

0.02 Kg of the dye C.I. Reactive Black 5 comprising the compound of Formula (IX) is dissolved in 50L of water added to 50 L of GLYMO. The mixture is stirred for 1 hour. An aqueous solution 50 Kg of silicate in 100 L of water is prepared and it is then added to the dye-GLYMO compound. This solution is then added to 130 L of solvent, 1 L of Triton is added and then is stirred for 60 minutes. 30 Kg of ammonium chloride are added and the silica particles are formed. They are then left to precipitate, filtered and dried.

### Example 8 - Dyeing wool by exhaustion with coloured nanoparticles

100mg of silica nanoparticles of the black reactive dye, prepared by process in example 7, are added to the container with 100 ml of water in a container in a laboratory dyeing machine. A piece of knitted bleached wool fabric weighing 1g is added. The pH is adjusted to 5 with sodium carbonate with acetic acid and the liquor containing the nanoparticles is heated up to 80°C, and simultaneously the machine is put into rotary motion. At the end of one hour, the fabric are taken out, rinsed under the tap with cold water, and dried in a stenter at 100°C for 5 minutes. The colour is measured in a spectrophotometer and the wash fastness is evaluated according to the standard ISO 105C05C6-C1 and the results are compared to the same fabric dyed with nanoparticles containing acid dye of the same colour (Tables 8 and 9).

### Example 9 - Dyeing cotton in a jet machine

15Kg of dry silica nanoparticles of dye reactive Red 120, commercially available, prepared by process in example 2, are added to 1000 L of water in a jet dyeing machine. A piece of knitted bleached cotton fabric weighing 100 Kg is added. The pH is adjusted to 8.5 with sodium carbonate, 20 Kg of common salt (sodium chloride) are added and the liquor containing the nanoparticles is heated up to 60°C, and simultaneously the machine is put into motion. At the end of one hour, the fabric taken out of the machine, rinsed with cold water, and dried in a stenter at 100°C for 2-5 minutes. The colour is measured in a spectrophotometer and the wash fastness is evaluated according to the standard ISO105C05C6-C1 and the results are compared to the same fabric dyed with nanoparticles containing acid dye of the same colour. The results of the fibres dyed with 15 Kg of nanoparticles containing reactive dyes applied to 100 Kg of the same fabric under the same dyeing conditions and after rinsing, the colour is much more intense as indicated by the K/S values and the fastness is also superior even at a much more intense colour as can be seen when comparing the results of table 1 and table 2.

### Example 10 - Dyeing cotton in a jet machine

30Kg of silica nanoparticles of dye reactive Red 120, commercially available, prepared by process in example 2, are added to 1000L of water in a jet dyeing machine. A piece of knitted bleached cotton fabric weighing 100Kg is added. The pH is adjusted to 8.5 with sodium carbonate, 20 Kg of common salt (sodium chloride) are added and the liquor containing the nanoparticles is heated up to 60°C, and simultaneously the machine is put into motion. At the end of one hour, 4Kg of Indosol E50 are added, after 10 minutes the fabric is taken out of the machine, rinsed with cold water, and dried in a stenter at 100°C for 5 minutes. The colour is measured in a spectrophotometer and the wash fastness is evaluated according to the standard ISO105C05C6-C2 and the results are compared to the same fabric dyed with nanoparticles containing acid dye of the same colour. The results of the fibres dyed with 30 Kg of nanoparticles containing reactive dyes applied to 100 Kg of the same fabric under the same dyeing conditions and after rinsing, the colour is much more intense as indicated by the K/S values and the fastness is also superior even at a much more intense colour as can be seen when comparing the results of table 3 and table 4.

### Example 11 - Dyeing cellulosic fibres by Pad-Batch with coloured nanoparticles

50 g of nanoparticles containing were dispersed in 200 ml of water. 20 g/L of softener Rucofin, 5g/L dispersant Luprintol PE were added, and a cotton fabric was immersed and squeezed in the rollers of the padding machine. The dyed fabric was then stored for 20 hours and was then rinsed in running cold water and dried in a stenter machine at 100°C for 5 minutes.

### Example 13 - Application of coloured nanoparticles by screen printing

3g of the coloured silica nanoparticles prepared by the process of example 2 are mixed with 30 g of sodium alginate, 200g of thickening agent, 30g of urea, 20g of sodium carbonate in 500 ml of water. The printing paste was then applied by flat screen frames onto a 100% bleached cotton fabric, and it was steamed for 5 minutes in a stenter at 104°C.

### Example 14 - Application of coloured nanoparticles by digital printing

30 g of the coloured silica nanoparticles are dispersed in water, 100 g of a dispersing agent and a 100 g of viscosity controlling agent are added to 1 L of water and then the dispersion is fed into the digital printing machine. The printing is applied onto a 100% cotton fabric and it is heated in an oven at 140°C for 3 minutes.

**Table 1 - K/S values and washfastness values (ICO105C06C2) for coloured nanoparticles with immobilized acid dye on cellulosic fibres of concentration of 15% o.w.f. of nanoparticles**

| | K/S | Wash fastness | |
|---|---|---|---|
| | | Colour alteration | Staining on cotton |
| CNP's blue | 4.7 | 3 | 3 |
| CNP's yellow | 1.5 | 4 | 4 |
| CNP's red | 4.9 | 4 | 4 |

**Table 2 - K/S values and washfastness (ICO105C06C2) values for coloured nanoparticles with immobilized reactive dye on cellulosic fibres for concentration of 15% o.w.f. of nanoparticles**

| | K/S | Wash fastness | |
|---|---|---|---|
| | | Colour alteration | Staining on cotton |
| CNP's blue | 9.38 | 4 | 4/5 |
| CNP's yellow | 6.5 | 4 | 4 |
| CNP's red | 9.58 | 4-5 | 5 |

## Claims

1. Silica nanoparticles having an immobilized anionic dye with at least amino (NH2), hydroxyl (OH), or OR group, where R is an alkyl group and the anionic dye is immobilized on silica nanoparticles which have at least one reactive group free for reacting with specific fibres and which contain a glycidyl reactive group in its epoxy form (formula A below) and the anionic dye is capable of reacting with a) cellulosic fibres or with b) protein fibres and the dye comprises the reactive group:
a) monochlorotriazine, dichlorotriazine, monofluorotriazine, difluorochloropyrimidine, vinylsulphone, pyrimidine and/or dichlorotriazine group, capable of reacting with cellulosic fibres, or
b) dichlorotriazine, difulorochloropyrimidine, vinylsulphone, pyrimidine and/or bromochloroacrylamide group, capable of reacting with protein fibres.

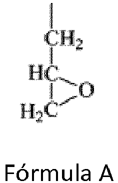

2. Silica nanoparticles, according to claim 1 wherein the immobilized dye comprises a bifunctional group selected from monochlorotriazine-vinylsulphone, monochlorotriazine-monochlorotriazine, fluorotriazine-vinyl-sulphone or fluorochloropyrimidine-vinylsul phone groups.

3. Silica nanoparticles, according to any of the claims 1 or 2, wherein the immobilized dye comprises a compound of general formulae, I, II, la, III, IV, V, VI 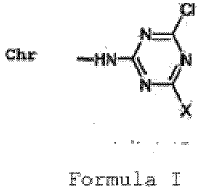 wherein,
[Chr] represents a chromophore;
X represents NH-R₁, CI or an aromatic group R₂;
R₁ represents CₙH₂ₙ₊₁; and
R₂ represents an aromatic group of the Formula (Ia) 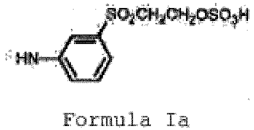 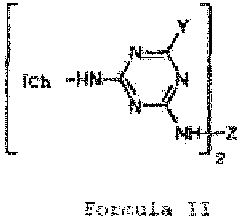
wherein,
[Chr] represents a chromophore;
Y represents fluorine, and
Z represents an alkene linking group 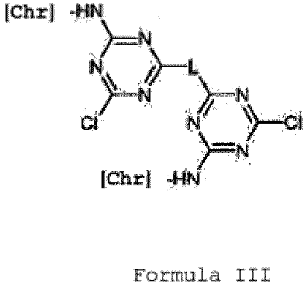
wherein,
[Chr] represents a chromophore; and L represents a linking amino group 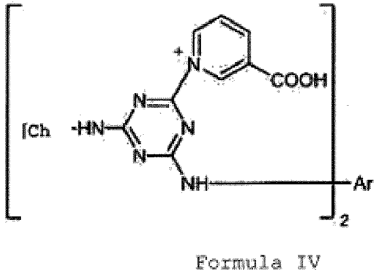 wherein,
[Chr] represents a chromophore;
and Ar represents an aromatic chromophore 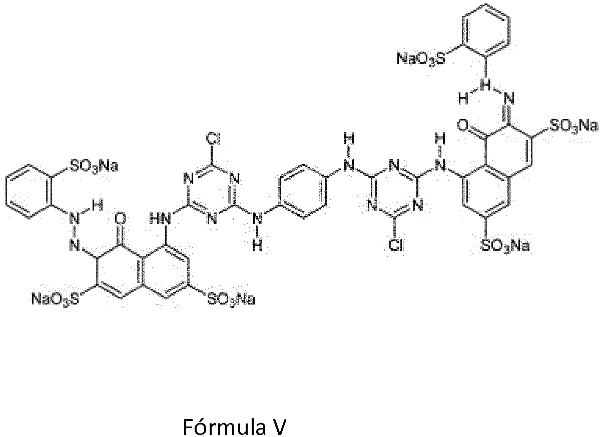 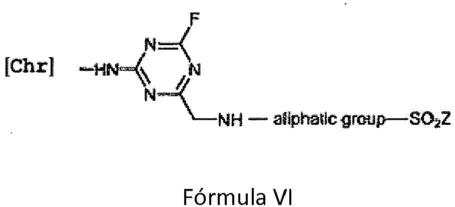
wherein,
Z represents CH=CH₂ or CH₂CH₂OSO₃Na

4. Silica nanoparticles, according to any of the claims 1 to 3, wherein the immobilized dyes further comprise a coupling agent that promotes the linkage between the silica nanoparticles and the amino (NH2), hydroxyl (OH), or OR groups of the dye, where R is an alkyl radical.

5. Silica nanoparticles, according to claim 4, wherein the coupling agent comprises at least one silane group of general formula (RO) 3Si-, in which R is a radical of general formula CnH2n+1, for reaction with the dye.

6. Silica nanoparticles, according to any of the claims 1 or 2 wherein one of the reactive groups of the coupling agent comprises a glycidyl group in its epoxy form for reaction with cellulosic, wool and silk fibres.

7. Silica nanoparticles, according to claim 6, wherein the coupling agent is (RO) 3Si-RCH2CH2OH in which R is a radical of general formula CnH2n+1.

8. Silica nanoparticles, according to claim 7 wherein the coupling agent is a 3-Glycidyloxypropyltrimethoxysilane compound (GLYMO).

9. A fibre comprising a silica nanoparticle as described in any of the claims 1 to 8.

10. A textile comprising a fibre as described in claim 9.

11. A process for making a silica nanoparticle as described in any of the claims 1 to 8, comprising the following steps:
a) Preparing a dye-silane intermediate compound with the selected dye and the silane described in claim 7;
b) Adding precursors of silica to the solution of a);
c) Polymerizing the precursors of silica of b) by adding an acid and an acid salt for the precipitation of silica nanoparticles.

12. A process, according to claim 11, wherein the silica nanoparticles are prepared in a water-in-oil emulsion (w/o) by adding an organic solvent between stage b) and c).

13. A process, according to claim 12, wherein the solvent used to prepare the w/o emulsion is hexane or petroleum ether.

14. A process, according to claim 11, wherein the silica nanoparticles are prepared in an oil-in-water emulsion (o/w) by addition of a silicate alkaline aqueous solution to a silane, which is lipophilic or immiscible with water and said silane is already linked to the dye via a previous reaction.

15. A process for fixing a silica nanoparticle to cellulosic or protein fibres as described in claims 1 to 8 comprising the following steps:
a) Providing a silica nanoparticle as defined in claims 1-8;
b) Contacting the selected fibre with an aqueous dispersion of the silica nanoparticles having an immobilized dye and comprising a reactive group.

16. A process, according to claim 15, wherein the step c) is performed by exhaustion at a temperature above 60 °C for promotion of the reaction between fibre and the reactive group of the dye.

17. A process according to claim 15 where step b) is performed at room temperature by pad-batch for promotion of reaction of the fibres with the reactive groups present in the nanoparticles.

18. A process, according to claim 15, wherein the silica nanoparticles are fixed to the fibre by a printing process followed by thermal fixation of the nanoparticles to the fibres.

19. A process according to claims 15-18, wherein the fibres are cellulosic fibres, wool and silk.

## Patentansprüche

1. Silica-Nanopartikel mit einem immobilisierten Anionenfarbstoff mit mindestens Amino (NH₂)-, Hidroxyl (OH) -oder OR-Gruppe, wobei R eine Alkylgruppe ist und der anionische Farbstoff an Silica-Nanopartikeln immobilisiert ist, die mindestens eine zur Reaktion freie Reaktivgruppe aufweisen mit spezifischen Fasern, die eine Glycidylreaktive Gruppe in ihrer Epoxyform enthalten (Formel A unten) und der anionische Farbstoff zur Reaktion mit:
a) Monochlortriazin-, Dichlortriazin-, Monofluortriazin-, Difluorchlorpyrimidin-, Vinylsulfon-, Pyrimidin- und / oder Dichlortriazingruppe, die mit Cellulosefasern reagieren können,
b) Dichlortriazin-, Difluorchlorpyrimidin-, Vinylsulfon-, Pyrimidin- und/oder Bromchloracryllamidgruppe, die mit Proteinfasern reagieren können.

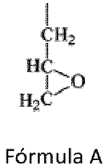

2. Silica-Nanopartikel nach Anspruch 1, wobei der immobilisierte Farbstoff eine bifunktionelle Gruppe umfasst, die aus Monochlortriazin-Vinylsulfon-, Monochlortriazin-Monochlortriazin-, Fluortriazin-Vinylsulfon oder Fluorchlorpyrimidin-Vinylsulfongruppen ausgewählt ist.

3. Silica-Nanopartikel nach einem der Ansprüche 1 oder 2, wobei der immobilisierte Farbstoff eine Verbindung der allgemeinen Formeln I, II, Ia, III, IV, V, VI umfasst 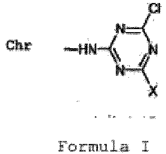 worin
[Chr] steht für einen Chromophor;
X für NH-R₁, Cl oder eine aromatische Gruppe R₂ steht;
R₁ CₙH₂ₙ₊₁ darstellt; und
R₂ steht für eine aromatische Gruppe der Formel (Ia) 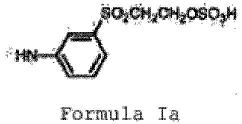 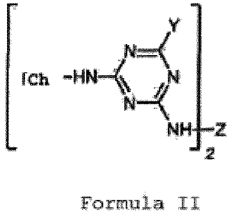
worin
[Chr] steht für einen Chromophor;
Y steht für Fluor und
Z steht für eine Alkenverknüpfungsgruppe 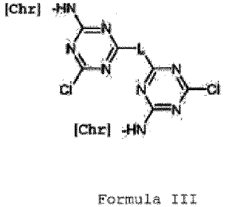
worin
[Chr] steht für einen Chromophor; und
L steht für eine verknüpfende Aminogruppe 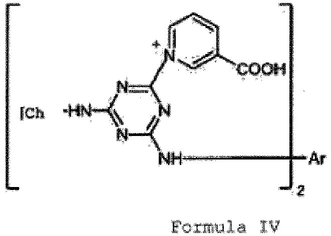
worin
[Chr] steht für einen Chromophor; und
Ar steht für einen aromatischen Chromophor 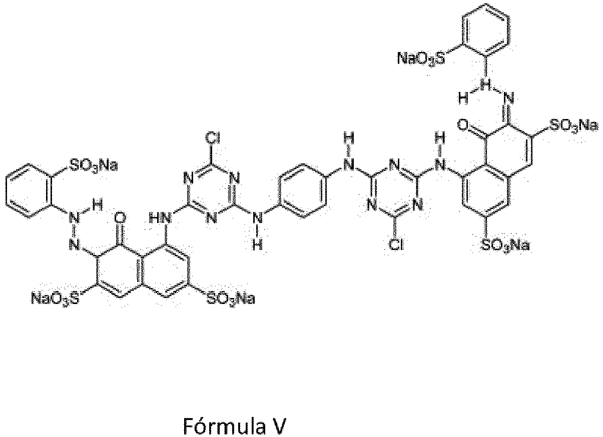 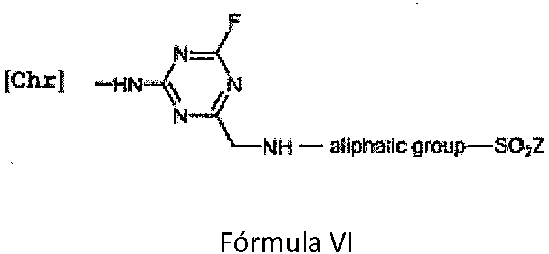
worin
Z steht für CH=CH₂ oder CH₂CH₂OSO₃Na

4. Silica-Nanopartikel nach einem der Ansprüche 1 bis 3, wobei der immobilisierte Farbstoff weiterhin ein Kupplungsmittel umfasst, das die Verknüpfung zwischen den Silica-Nanopartikeln und den Amino (NH2) -, Hydroxyl (OH) - oder OR-Gruppen des Farbstoffs fördert, wobei R ist ein Alkylrest.

5. Silica-Nanopartikel nach Anspruch 4, wobei das Haftmittel mindestens eine Silangruppe der allgemeinen Formel (RO)3Si- umfasst, worin R einen Rest der allgemeinen Formel CₙH₂ₙ₊₁ darstellt, zur Umsetzung mit dem Farbstoff.

6. Silica-Nanopartikel nach einem der Ansprüche 1 oder 2, wobei eine der reaktiven Gruppen des Kupplungsmittels eine Glycidylgruppe in ihrer Epoxyform zur Reaktion mit Cellulose-, Woll und Seidenfasern umfasst.

7. Silica-Nanopartikel nach Anspruch 6, worin das Kupplungsmittel (RO) 3Si-RCH₂CH₂OH ist, worin R ein Rest der allgemeinen Formel CₙH₂ₙ₊₁ ist.

8. Silica-Nanopartikel nach Anspruch 7, wobei das Kupplungsmittel eine 3-Glycidyloxypropyltrimethoxysilanverbindung (GLYMO) ist.

9. Faser, umfassend ein Silika-Nanopartikel nach einem der Ansprüche 1 bis 8.

10. Textil, umfassend eine Faser wie in Anspruch 9 beschrieben.

11. Verfahren zur Herstellung eines Silica-Nanopartikels nach einem der Ansprüche 1 bis 8, umfassend die folgenden Schritte:
a)Herstellung einer Farbstoff-Silan-Zwischenverbindung mit dem ausgewählten Farbstoff und dem in Anspruch 7 beschriebenen Silan;
b)Zugabe von Percursoren von Silica zur Lösung von a);
c)Polymerisation der Percursoren von Silica von b) durch Zugabe einer Säure und eines Säuresalzes zur Ausfällung von Silica-Nanopartikel.

12. Verfahren nach Anspruch 11, wobei die Silica-Nanopartikel in einer Wasser-in-Öl-Emulsion (W/O) durch Zugabe eines organischen Lösungsmittels zwischen Stufe b) und a) hergestellt werden.

13. Verfahren nach Anspruch 12, wobei das
Das zur Herstellung der W/O-Emulsion verwendete Lösungsmittel ist Hexan oder Petrolether.

14. Verfahren nach Anspruch 11, wobei das
Silica-Nanopartikel werden in einer Öl-in-Wasser-Emulsion (O/W) durch Zugabe einer wässrigen Silicat-Lösung zu einem Silan hergestellt, das lipophil oder mit Wasser nicht mischbar ist, und das Silan ist bereits über eine vorherige Reaktion mit dem Farbstoff verknüpft.

15. Verfahren zum Fixieren eines Silica-Nanopartikels an Cellulose- oder Proteinfasern gemäß den Ansprüchen 1 bis 8, umfassend die folgenden Schritte:
a)Bereitstellen eines Silica-Nanopartikels wie in den Ansprüchen 1 bis 8 definiert;
b)Kontaktieren der ausgewählten Fasern mit einer wässrigen Dispersion der Silica-Nanopartikel mit einem immobilisierten Farbstoff und umfassend eine reaktive Gruppe;

16. Verfahren nach Anspruch 15, wobei der Schritt c) durch Erschöpfen bei einer Temperatur von über 60°C durchgeführt wird, um die Reaktion zwischen der Faser und der reaktiven Gruppe des Farbstoffs zu fördern.

17. Verfahren nach Anspruch 15, wobei Schritt b) bei Raumtemperatur durch *Pad-Batch* durchgeführt wird, um die Reaktion der Fasern mit den in den Nanopartikeln vorhandenen reaktiven Gruppen zu fördern.

18. Verfahren nach Anspruch 15, wobei die Silica-Nanopartikel durch ein Druckverfahren an der Faser fixiert werden, gefolgt von einer thermischen Fixierung der Nanopartikel an der Faser.

19. Verfahren nach den Ansprüchen 15 bis 18, wobei die Fasern Zellulosefasern, Wolle und Seide sind.

## Revendications

1. Des nanoparticules de silice ayant un colorant anionique immobilisé avec au moins un groupe amine (NH2), hydroxyle (OH), ou OR, où R est un groupe alkyle et le colorant anionique est immobilisé sur des nanoparticules de silice qui ont au moins un groupe réactif libre pour réagir avec des fibres spécifiques et lequel contient un groupe réactif de glycidyle dans sa forme d'époxyde (formule A ci-après) et le colorant anionique est capable de réagir avec a) des fibres en cellulose ou avec b) des fibres de protéine et le colorant comprend le groupe réactif :
a) monochlorotriazine, dichlorotriazine, monofluorotriazine, difluoro-chloropyrimidine, vinylsulfone, pyrimidine et/ou un groupe dichlorotriazine, capable de réagir avec des fibres en cellulose, ou bien
b) dichlorotriazine, difluorochloropyrimidine, vinylsulfone, pyrimidine et/ou un groupe bromochloroacrylamide, capable de réagir avec des fibres de protéine.

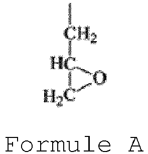

2. Des nanoparticules de silice, selon la revendication 1, où le colorant immobilisé comprend un groupe bifonctionnel sélectionné parmi les groupes monochlorotriazine-vinylsulfone, monochlorotriazine-monochlorotriazine, fluorotriazine-vinylsulfone ou fluorochloropyrimidine-vinylsulfone.

3. Des nanoparticules de silice, selon quelqu'une des revendications 1 ou 2, où le colorant immobilisé comprend un composé de formules générales I, II, la, III, IV, V, VI 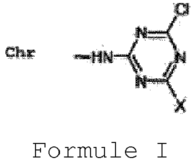 où
[Chr] représente un chromophore ;
X représente NH-R₁, Cl ou un groupe aromatique R₂;
R₁ représente CₙH₂ₙ₊₁ ; et
R₂ représente un groupe aromatique de la Formule (Ia) 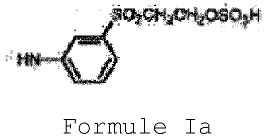 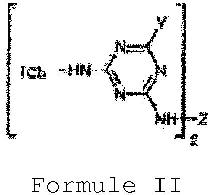
où
[Chr] représente un chromophore ;
Y représente fluorine, et
Z représente un groupe de liaison alcène 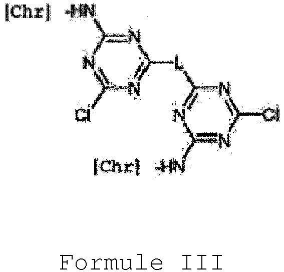
où
[Chr] représente un chromophore ; et L représente un groupe aminé de liaison 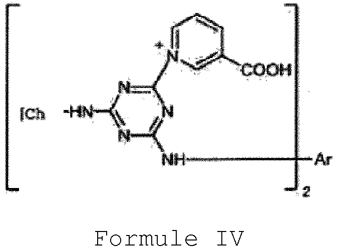 où
[Chr] représente un chromophore ;
et Ar représente un chromophore aromatique 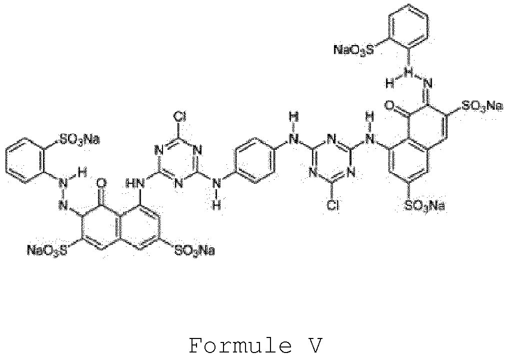 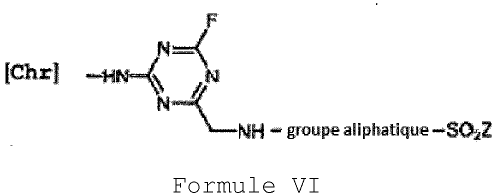
où
Z représente CH=CH₂ ou CH₂CH₂OSO₃Na

4. Des nanoparticules de silice, selon quelqu'une des revendications 1 à 3, où les colorants immobilisés comprennent un agent d'accrochage qui enforce la liaison entre les nanoparticules de silice et les groupes amine (NH2), hydroxyle (OH), ou OR du colorant, où R est un radical alkyle.

5. Des nanoparticules de silice, selon la revendication 4, où l'agent d'accrochage comprend au moins un groupe silane de formule générale (RO) 3Si-, dans lequel R est un radical de formule générale CnH2n+1, pour réaction avec le colorant.

6. Des nanoparticules de silice, selon quelqu'une des revendications 1 ou 2, où un des groupes réactifs de l'agent d'accrochage comprend un groupe glycidyle en sa forme époxyde pour réaction avec des fibres en cellulose, en laine et en soie.

7. Des nanoparticules de silice, selon la revendication 6, où l'agent d'accrochage est (RO) 3Si-RCH2CH2OH dans lequel R est un radical de formule générale CnH2n+1.

8. Des nanoparticules de silice, selon la revendication 7, où l'agent d'accrochage est un composé de 3-Glycidyloxipropyltrimetoxysilane (GLYMO).

9. Une fibre comprenant une nanoparticule de silice comme décrite en quelqu'une des revendications 1 à 8.

10. Un textile comprenant une fibre telle que décrite dans la revendication 9.

11. Un procédé pour fabriquer une nanoparticule de silice telle que décrite en quelqu'une des revendications 1 à 8, comprenant les étapes suivantes :
a) Préparation d'un composé intermédiaire de colorant-silane avec le colorant sélectionné et le silane décrit à la revendication 7 ;
b) Ajouter des précurseurs de silice à la solution obtenue en a) ;
c) Polymériser les précurseurs de silice obtenus en b) par l'addition d'un acide et un sel acide pour la précipitation des nanoparticules de silice.

12. Un procédé, selon la revendication 11, où les nanoparticules de silice sont préparées dans une émulsion eau-en-huile (e/h) par l'addition d'un solvant organique entre le stage b) et le c).

13. Un procédé, selon la revendication 12, où le solvant utilisé pour préparer l'émulsion e/h est l'hexane ou l'éther de pétrole.

14. Un procédé, selon la revendication 11, où les nanoparticules de silice sont préparées dans une émulsion huile-en-eau (h/e) par l'addition d'une solution aqueuse d'un silicate au silane, qui est lipophile ou immiscible dans l'eau, ledit silane étant déjà lié au colorant par une réaction précédente.

15. Un procédé pour fixer une nanoparticule de silice sur des fibres de cellulose ou de protéine, comme décrit dans les revendications 1 à 8 comprenant les étapes suivantes :
a) Fournir une nanoparticule de silice comme définie dans les revendications 1-8 ;
b) Mettre la fibre sélectionnée en contact avec une dispersion aqueuse de nanoparticules de silice ayant un colorant immobilisé e comprenant un groupe réactif.

16. Un procédé, selon la revendication 15, où l'étape c) est effectuée par épuisement à une température de plus de 60 °C pour promouvoir la réaction entre la fibre et le groupe réactif du colorant.

17. Un procédé, selon la revendication 15, où l'étape b) est effectuée à température ambiante, en discontinu, pour promouvoir la réaction des fibres avec les groupes réactifs présents dans les nanoparticules.

18. Un procédé, selon la revendication 15, où les nanoparticules de silice sont fixées sur la fibre par un procédé d'impression suivi par fixation thermique des nanoparticules sur les fibres.

19. Un procédé selon des revendications 15-18, où les fibres sont des fibres en cellulose, en laine et en soie.
